# EUROPÄISCHE PATENTSCHRIFT

(11) **EP 1 202 878 B1**
(45) Veröffentlichungstag und Bekanntmachung des Hinweises auf die Patenterteilung: **01.02.2006**
(21) Anmeldenummer: 01962603.5
(22) Anmeldetag: 10.08.2001
(51) Int. Cl.: B60R 21/09, B60T 7/06

(54) **BAUEINHEIT FÜR EIN KRAFTFAHRZEUG**
COMPONENT FOR A MOTOR VEHICLE
ENSEMBLE POUR AUTOMOBILE

(30) Priorität: 11.08.2000 DE 10040043
(43) Veröffentlichungstag der Anmeldung: 08.05.2002
(73) Patentinhaber: ZF Lemförder Metallwaren AG, 49441 Lemförde (DE)
(72) Erfinder: BURGSTALER, Andree, 32351 Dielingen (DE); DÜTZ, Jan, 49401 Damme (DE); PÄTZOLD, Simone, 49692 Cappeln (DE)
(86) Internationale Anmeldenummer: PCT/DE2001/002972
(87) Internationale Veröffentlichungsnummer: WO 2002/014114

(56) Entgegenhaltungen:
- EP-A- 0 659 615
- EP-A- 0 827 874
- DE-C- 19 531 733

## Beschreibung

Die Erfindung betrifft eine Baueinheit für ein Kraftfahrzeug nach dem Oberbegriff des Patentanspruches 1, wie sie aus der EP-A-827 874 oder EP-A-659 615 bekannt ist.

Die in Kraftfahrzeugen zum Einsatz kommenden Sicherheitseinrichtungen zum Schutz der Fahrzeuginsassen bei einem Unfall beziehen sich zumeist auf den Schutz des Kopf- und Oberkörperbereiches. Bei der Entwicklung von Sicherheitskonzepten werden häufig die zum Teil schwerwiegenden Verletzungen der unteren Extremitäten vernachlässigt. Es ist jedoch seit längerem bekannt, dass insbesondere bei einem Frontalaufprall eines Kraftfahrzeuges die Insassen nicht in der Lage sind, die auftretenden Beschleunigungskräfte abzufangen, sodass unter anderem die unteren Extremitäten der im Frontbereich sitzenden Personen in den Fußraumbereich hinein geschleudert werden. Der gesamte Fußraum kann sich bei der zuvor genannten Unfallsituation extrem verformen. Die in der Folge entstehenden Verletzungen sind für den oder die Betroffenen schmerzhaft und können sogar bis zu lebenslangen Verstümmelungen führen.

Um diesem Umstand entgegenzuwirken und das Gefahrenpotential im Fußraum des Fahrzeugführers zu reduzieren, sind aus dem Stand der Technik unterschiedliche Lösungen bekannt. So gibt es Ausführungen, bei denen die Fußpedalerie insgesamt aus dem Gefahrenbereich heraus bewegt wird, wodurch verhindert werden kann, dass sich die Füße beispielsweise zwischen den Pedalen verklemmen und dadurch schwere Verletzungen entstehen.
Andere Lösungsansätze gehen von einer vollständigen Ablösung der Pedalerie aus. So ist beispielsweise aus der EP 0 827 874 A2 oder der EP 0 659 615 A1 jeweils eine Anordnung zur Lagerung eines Pedals bekannt, die bei einem Unfall des Kraftfahrzeuges und der damit verbundenen Deformierung der vorderen Spritzwand ein Ablösen der Pedale ermöglicht.
Die beschriebenen Ausführungen umfassen einen Lagerbock, in dem die um eine Achse verschwenkbaren Pedale auf Bolzen gelagert sind. Der oder die Bolzen sind ihrerseits in Aufnahmen des Lagerbockes festgelegt. Dabei weist der Lagerbock zumindest einen aufweitbaren Abschnitt auf, sodass die bei einem Unfall von außen aufgebrachte Krafteinwirkung zu einer Deformierung der vorderen Spritzwand führt und in Folge dessen den Lagerbock aufweitet oder spreizt. Die Aufweitung kann mittels eines keilförmigen Elementes erfolgen, welches zwischen die Schenkel des Lagerbockes getrieben wird. Die hierzu erforderliche kinetische Energie wird aus der Bewegung der sich bei einem Unfall relativ zueinander verformenden Kraftfahrzeugteile gewonnen. Damit erfolgt die Freigabe der die Fußpedale lagernden Bolzen, sodass die Pedale mit dem Bolzen aus ihrer Halterung gelöst werden. Der Lagerbock weist zwei separat anzubringende Lagerstellen auf, in die der Bolzen einsteckbar ist. Zwei einander überdeckende Blechlappen des Lagerbockes sind durch eine Verschraubung miteinander verbunden. An dem aus Blechmaterial hergestellten Lagerbock werden zunächst die beiden Lagerstellen einander gegenüberliegend montiert, sodass Bolzen und Fußpedal einsetzbar sind. Während dieses Montagevorganges muß die Baugruppe zusammen gehalten und von der Oberseite her mit der zuvor genannten Verschraubung ausgestattet werden.
Mit einer derartigen Vorrichtung kann zwar die Gefahr von schwerwiegenden Verletzungen der unteren Extremitäten verringert werden. Allerdings ist die Montage der in den Schriften genannten Ausführungen aufwendig und damit kostenintensiv.

Der Erfindung liegt die technische Problemstellung zugrunde, eine Baueinheit für ein Kfz zu schaffen, die neben einem vereinfachten Aufbau und einer damit verbundenen kostengünstigeren Montage eine sichere Befestigung der daran zu lagernden Hebelarme ebenso wie ein zuverlässiges Ablösen derselben im Bedarfsfall gewährleistet.

Diese technische Problemstellung wird mit den Merkmalen des Patentanspruches 1 gelöst.

Mit der erfindungsgemäßen Baueinheit, bei der der wenigstens zweiteilig ausgeführte Bolzen nach der Montage mindestens einen Verbindungsbereich aufweist, an dem die Bolzenteile formschlüssig und kraftschlüssig miteinander in Eingriff gebracht sind, ist es möglich, die erforderliche Montagezeit erheblich zu reduzieren und damit kostenoptimiert zu produzieren. Die gesamte Baueinheit ist sehr einfach aufgebaut und kann beispielsweise aus Kunststoff-Formteilen hergestellt sein. Durch die Herstellung aus einem Kunststoff läßt sich zudem eine erhebliche Gewichtsersparnis erreichen. Die Lagerungen sind einfach und sehr haltbar und erfüllen sämtliche im modernen Kraftfahrzeugbau erforderlichen Anforderungen, insbesondere sämtliche Sicherheitsanforderungen. Selbstverständlich ist es ebenso möglich, den Lagerbock insgesamt aus Metall herzustellen, wobei zumindest der aufweitbare Bereich des Lagerbockes bevorzugt aus Metallblech besteht. Hierzu bieten sich Mehrkomponentenwerkstoffe, wie beispielsweise Kunststoffe mit Metalleinlagen oder Verstärkungen mittels Glasfasern an.

Bei einer erfindungsgemäßen Lösung können ferner die bei bekannten Ausführungen notwendigen zusätzlichen Sicherungselemente zur Verliersicherung entfallen. Die Verliersicherung wird hierbei in einfacher Weise durch die zweiteilige Ausführung des Bolzens realisiert, wobei dessen Einzelteile miteinander in Eingriff gebracht sind.

Die Verwendung der erfindungsgemäßen Baueinheit ist selbstverständlich nicht auf die vorliegend beschriebenen Einsatzzwecke beschränkt. Vielmehr kann sie überall dort sinnvoll sein, wo ein Hebelarm lösbar zwischen zwei Schenkeln eines Lagerbockes befestigt werden soll und die zur Aufweitung des Lagerbockes erforderliche kinetische Energie bereitstellbar ist.

Weitere Ausgestaltungen der Erfindung sind Gegenstand der Unteransprüche.

So kann gemäß einer Weiterbildung des Erfindungsgedankens der Hebelarm ein Fußpedal eines Kfz sein.
Vorzugsweise wird die Verbindung zwischen den Bolzenteilen als elastische Schnappverbindung ausgeführt, wobei, um die Elastizität der Schnappverbindung zu gewährleisten, ferner vorgeschlagen wird, den ersten Bolzenteil einseitig wenigstens einfach zu schlitzen. Dieses mit hakenförmigen Bereichen ausgestattete geschlitzte Ende des ersten Bolzenteiles kann zur Erleichterung der Einführung in das zweite Bolzenteil in seinem diesem zugewandten Endbereich eine Verjüngung aufweisen, die beispielsweise aus einem konischen Bereich besteht. Damit wird ein Verkanten oder Verklemmen der Bauteile in einfachster Weise wirkungsvoll vermieden. Während der Montage übt der konische Bereich beziehungsweise der Verjüngungsbereich eine Selbstjustierfunktion aus. Der zweite Bolzenteil weist entsprechend der erfindungsgemäßen Ausführung eine Innenoberfläche mit einer endseitigen Eingriffskontur auf, die von den zuvor genannten hakenförmigen Bereichen des ersten Bolzenteiles hintergriffen wird. Im Verbindungsbereich zwischen den Bolzenteilen greifen diese demnach mit zueinander komplementären Geometrien ineinander.

Gemäß einer weiteren Ausgestaltung der Erfindung stützt sich der Hebelarm, in Axialrichtung des diesen durchsetzenden Bolzens gesehen, mit flanschartigen Abschnitten beidseitig an Lagerelementen des Lagerbockes ab. Durch diese Abstützung wird ein axiales Spiel und damit eine axiale Beweglichkeit des Hebelarmes auf dem Bolzen vermieden. Auf seiner Innenoberfläche weist der Hebelarm ferner einen Anschlag auf, an dem diesem zugeordnete Kontaktflächen der Bolzenteile anliegen. Durch eine derartige Weiterbildung der Erfindung kann die Lagerung des Bolzens im Lagerbock in Form einer Gleitverbindung hergestellt werden, sodass aufwendige Verschraubungen entfallen können und die Montage mittels einer Steckverbindung möglich ist. Darüber hinaus bleibt somit die Drehbeweglichkeit des Hebelarmes und des Bolzens um die Bolzenmittenachse erhalten. Der Vorteil der gleitbeweglichen Aufnahme des Bolzens innerhalb der Lagerelemente besteht ferner darin, dass dem im Falle eines Unfalles sich aufweitenden Lagerbock nahezu kein Widerstand entgegengesetzt wird. Der Lagerbock würde sich verformen (ausbeulen) und damit den Bolzen freigeben, sodass der Hebelarm beziehungsweise das Fußpedal zuverlässig ablösbar sind und folgenschwere Unfallschäden bei dem Fahrzeugführer vermieden werden können. Zur Gleitlagerung können konventionelle Gleitlager oder auch Mehrschichtlager eingesetzt werden, die aus mehreren Einzellagen bestehen.

Der Montagevorgang einer erfindungsgemäßen Baueinheit läßt sich nach erfolgter Herstellung der Einzelteile kurz wie folgt darstellen:
Der Hebelarm wird zunächst zwischen zwei Schenkeln des mit den Lagerelementen ausgestatteten Lagerbockes eingesetzt und befindet sich in einer Position, in der seine Durchgangsbohrung mit den in den Schenkeln des Lagerbockes vorhandenen Aufnahmen beziehungsweise Bohrungen fluchtet.
Anschließend erfolgt das Einsetzen der Lagerbolzenteile von beiden Außenseiten des Lagerbockes her, wobei dies gleichzeitig möglich ist. Die Lagerbolzenteile werden miteinander in Eingriff gebracht, sodass der Hebelarm in diesem Zustand bereits montiert ist.
Zur Montage der gesamten Baueinheit sind lediglich zwei grundsätzliche Arbeitsschritte erforderlich.

Eine bevorzugte Ausführungsform einer erfindungsgemäßen Baueinheit wird nachfolgend unter Bezugnahme auf die zugehörigen Zeichnungen näher beschrieben.
Es zeigen:
- Figur 1:: einen ausschnittsweisen Querschnitt durch eine erfindungsgemäße Baueinheit,

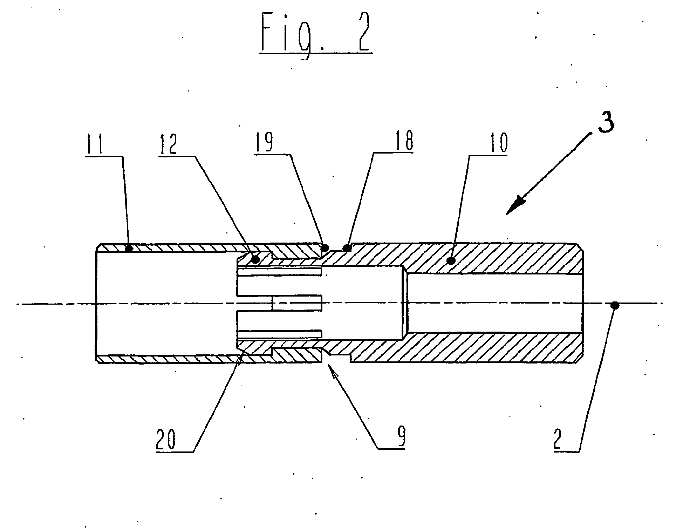

- Figur 2:: einen Bolzen als Einzelteil
und
- Figur 3:: den Lagerbock als Metall-Kunststoff-Verbundbauteil.

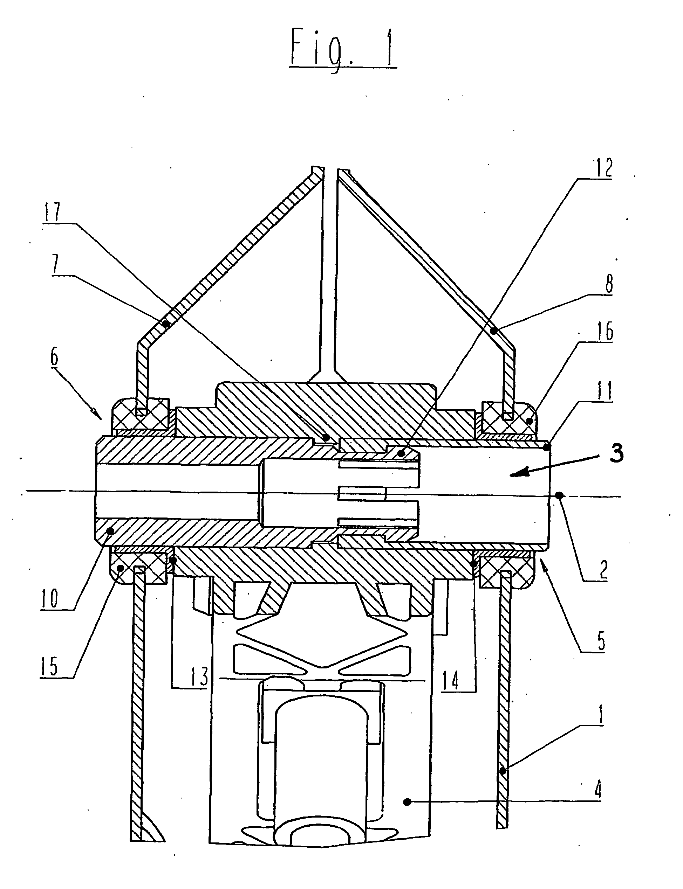

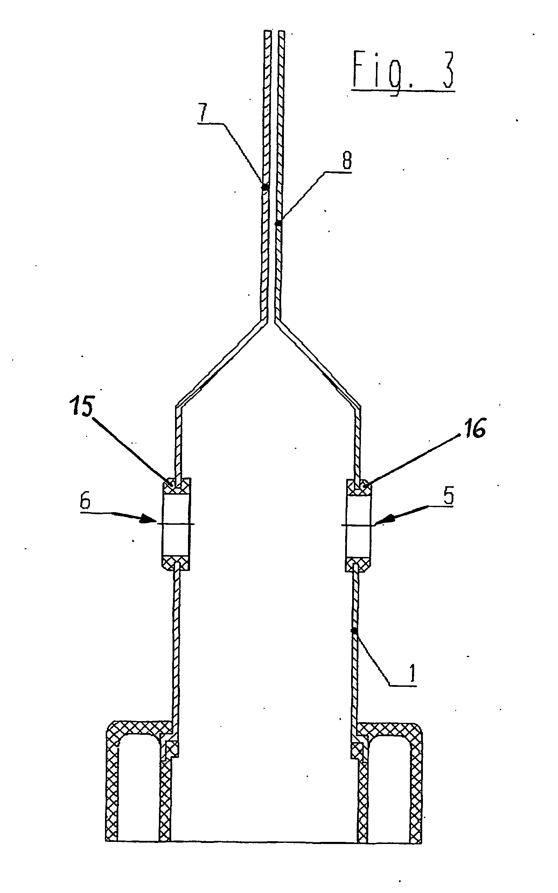

In der Figur 1 ist ausschnittsweise ein Querschnitt durch eine erfindungsgemäße Baueinheit dargestellt. Ein in Figur 3 als Einzelteil dargestellter Lagerbock 1 weist zwei aufweitbare Abschnitte 7 und 8 auf. Diese können bei einem Unfall in an sich bekannter Weise durch eine Keilfläche aufgeweitet oder in anderer Weise auseinander getrieben werden.

Der Lagerbock 1 besteht aus zwei annähernd parallelen Schenkeln, in die jeweils eine als Bohrung ausgeführte Aufnahme 5 beziehungsweise 6 eingebracht ist. Die Bohrungen 5, 6 der Schenkel fluchten miteinander. Zwischen den Schenkeln des Lagerbockes 1 wird ein Hebelarm 4, welcher vorliegend ein Fußpedal eines Kfz ist, eingesetzt. Zur Lagerung des Hebelarmes 4 dient ein zweiteilig ausgeführter Bolzen, der insgesamt mit 3 bezeichnet wurde. Der Hebelarm 4 ist somit um eine Achse 2 verschwenkbar auf dem Bolzen 3 angeordnet.

Als Gleitlagerungen mit einer Gleitschicht an ihrem Innenumfang ausgestattete Lagerelemente 15 und 16 werden als Kunststoff-Formteile in die zuvor genannten Bohrungen des Lagerbockes 1 eingesetzt oder eingeknüpft. Somit bilden die Lagerelemente 15 und 16, in Axialrichtung des Bolzens 3 gesehen, Anschläge zur Anlage von Flanschabschnitten 13 und 14 des Hebelarmes 4. Der Hebelarm 4 ist damit in Axialrichtung des Bolzens 3 betrachtet unverschiebbar zwischen den Schenkeln des Lagerbockes 1 aufgenommen.

Die Bolzenteile 10 und 11 des Bolzens 3 werden während der Montage von beiden Außenseiten des Lagerbockes 1 in die hierfür vorgesehenen, mit den Lagerelementen 15 und 16 ausgestatteten Bohrungen 5, 6 eingeführt.

Der Vorteil der mit den Lagerelementen 15 und 16 bewirkten gleitbeweglichen Aufnahme des Bolzens 3 besteht darin, dass dem im Falle eines Unfalles sich aufweitenden Lagerbock 1 nahezu kein Widerstand entgegengesetzt wird. Der Lagerbock 1 kann sich verformen (ausbeulen) und damit den Bolzen 3 freigeben, sodass der Hebelarm 4 beziehungsweise das Fußpedal ablösbar ist und folgenschwere Unfallschäden bei dem Fahrzeugführer vermieden werden können.

In einem Verbindungsbereich 9 des Bolzens 3 greifen zwei Bolzenteile 10 und 11 form- und kraftschlüssig ineinander. Hierzu weist der erste Bolzenteil 10 in seinem Endbereich einen geschlitzten Abschnitt auf, welcher darüber hinaus mit hakenförmigen Bereichen 12 ausgestattet ist. Auf der dem zweiten Bolzenteil 11 zugewandten Seite verfügt der hakenförmige Bereich 12 des ersten Bolzenteiles 10 über einen Verjüngungsabschnitt 20. Dieser erleichtert das Ineinanderführen der beiden Bolzenteile während der Montage. Die Eingriffskontur des zweiten Bolzenteiles 11 ist derart ausgeführt, dass ein Hintergreifen durch die hakenförmige Bereiche 12 des ersten Bolzenteiles 10 im endmontierten Zustand erfolgt. Ein Anschlag 17 an der Innenoberfläche des Hebelarmes 4 gewährleistet, dass der Bolzen 3 unverlierbar in der Baueinheit aufgenommen ist. Dieser weist an seinen Bolzenteilen 10 und 11 jeweils Kontaktflächen 18 beziehungsweise 19 auf, die sich im montierten Zustand an dem Anschlag 17 abstützen.

Neben den in den Figuren gezeigten Ausführungen, bei denen die Bolzenteile über hakenförmige Abschnitte ineinander greifen, können selbstverständlich auch andere Ausführungsformen zur Verbindung der beiden Bolzenteile gewählt werden. So ist hier an eine bajonettverschlußartige Verbindung, an einen Gewindebereich oder ähnliche Verbindungsarten gedacht.

### Bezugszeichenliste:

- 1.: Lagerbock
- 2.: Achse
- 3.: Bolzen
- 4.: Hebelarm
- 5.: Aufnahme (Bohrung)
- 6.: Aufnahme (Bohrung)
- 7.: Aufweitbarer Abschnitt
- 8.: Aufweitbarer Abschnitt
- 9.: Verbindungsbereich
- 10.: Erster Bolzenteil
- 11.: Zweiter Bolzenteil
- 12.: Hakenförmiger Bereich
- 13.: Flanschabschnitt
- 14.: Flanschabschnitt
- 15.: Lagerelement
- 16.: Lagerelement
- 17.: Anschlag
- 18.: Kontaktfläche
- 19.: Kontaktfläche
- 20.: Verjüngung (Konus)

## Patentansprüche

1. Baueinheit für ein Kraftfahrzeug mit einem in einem Lagerbock (1) um eine Achse (2) verschwenkbar auf einem in Aufnahmen (5, 6) des Lagerbockes festgelegten Bolzen (3) angeordneten Hebelarm (4), wobei der Lagerbock (1) wenigstens einen sich bei einem Unfall infolge der auf die Baueinheit aufgebrachten Krafteinwirkung öffnenden oder aufweitbaren Abschnitt (7, 8) aufweist, sodass infolge der Krafteinwirkung der Bolzen außer Eingriff der Aufnahmen (5, 6) gelangt;
**dadurch gekennzeichnet, dass**
der wenigstens zweiteilig ausgeführte Bolzen (3) nach der Montage der Baueinheit mindestens einen Verbindungsbereich (9) aufweist, an dem die Bolzeneinzelteile (10, 11) formschlüssig und kraftschlüssig miteinander in Eingriff gebracht sind.

2. Baueinheit für ein Kraftfahrzeug nach Anspruch 1,
**dadurch gekennzeichnet, dass**
der Hebelarm (4) ein Fusspedal ist.

3. Baueinheit für ein Kraftfahrzeug nach einem der vorstehend genannten Ansprüche,
**dadurch gekennzeichnet, dass**
die Verbindung zwischen den Bolzeneinzelteilen (10 und 11) eine elastische Schnappverbindung ist.

4. Baueinheit für ein Kraftfahrzeug nach einem der vorstehend genannten Ansprüche,
**dadurch gekennzeichnet, dass**
ein erster Bolzenteil (10) ein einseitig, wenigstens einfach geschlitztes Ende mit hakenförmigen Bereichen (12) aufweist, an deren dem anderen Bolzenteil (11) zugewandter Seite sich verjüngende Abschnitte (20) vorhanden sind.

5. Baueinheit für ein Kraftfahrzeug nach Anspruch 4,
**dadurch gekennzeichnet, dass**
der Bolzenteil (11) endseitige eine Eingriffskontur aufweist, die von den hakenförmigen Bereichen (12) des ersten Bolzenteiles (10) hintergriffen wird.

6. Baueinheit für ein Kraftfahrzeug nach einem der vorstehend genannten Ansprüche,
**dadurch gekennzeichnet, dass**
in die Aufnahmen (5, 6) des Lagerbockes (1) Lagerelemente (15, 16) eingesetzt sind, von denen der Bolzen (3) drehbeweglich und gleitend aufgenommen ist.

7. Baueinheit für ein Kraftfahrzeug nach Anspruch 6,
**dadurch gekennzeichnet, dass**
die Lagerelemente (15, 16) Mehrschichtlager sind.

8. Baueinheit für ein Kraftfahrzeug nach Anspruch 6 oder 7,
**dadurch gekennzeichnet, dass**
der Hebelarm (4) mit flanschartigen Abschnitten (13, 14) in Axialrichtung des Bolzens (3) gesehen beidseitig an den Lagerelementen (15, 16) des Lagerbockes (1) abgestützt ist und an seiner Innenkontur einen Anschlag (17) aufweist, an dem zugeordnete Kontaktflächen (18, 19) des Bolzens (3) anliegen.

## Claims

1. Constructional unit for a motor vehicle having a lever arm (4), which is disposed in a bearing block (1) pivotably about an axis (2) on a bolt (3) fixed in receivers (5, 6) of the bearing block, wherein the bearing block (1) has at least one portion (7, 8) that opens or is expandable in the event of an accident as a result of the action of force applied to the constructional unit, so that as a result of the action of force the bolt disengages from the receivers (5, 6),
**characterized in that**
after assembly of the constructional unit the at least two-piece bolt (3) has at least one connection region (9) where the individual bolt parts (10, 11) are brought positively and non-positively into mutual engagement.

2. Constructional unit for a motor vehicle according to claim 1,
**characterized in that**
the lever arm (4) is a foot pedal.

3. Constructional unit for a motor vehicle according to one of the preceding claims,
**characterized in that**
the connection between the individual bolt parts (10 and 11) is an elastic snap connection.

4. Constructional unit for a motor vehicle according to one of the preceding claims,
**characterized in that**
a first bolt part (10) has an end, which is slotted at least once at one end and has hook-shaped regions (12), at the side of which facing the other bolt part (11) tapering portions (20) are provided.

5. Constructional unit for a motor vehicle according to claim 4,
**characterized in that**
the bolt part (11) at one end has an engagement contour, behind which the hook-shaped regions (12) of the first bolt part (10) engage.

6. Constructional unit for a motor vehicle according to one of the preceding claims,
**characterized in that**
bearing elements (15, 16), by which the bolt (3) is received in a rotatable and sliding manner, are inserted into the receivers (5, 6) of the bearing block (1).

7. Constructional unit for a motor vehicle according to claim 6,
**characterized in that**
the bearing elements (15, 16) are multilayer bearings.

8. Constructional unit for a motor vehicle according to claim 6 or 7,
**characterized in that**
the lever arm (4) is supported by flange-like portions (13, 14), viewed in axial direction of the bolt (3), on both sides against the bearing elements (15, 16) of the bearing block (1) and has on its inner contour a stop (17), against which associated contact faces (18, 19) of the bolt (3) lie.

## Revendications

1. Unité de construction pour un véhicule automobile comportant un bras de levier (4) disposé dans un bloc de palier (1) de manière à pouvoir tourner autour d'un axe (2) sur un goujon (3) fixé dans des logements (5,6) du bloc de palier, le bloc de palier (1) comportant au moins une section (7,8) qui s'ouvre ou peut s'élargir dans le cas d'un accident en raison de l'action de force appliquée à l'unité de construction, de telle sorte que sous l'effet de l'action de force, le goujon se dégage des logements (5,6),
**caractérisée en ce que**
le goujon (3) réalisé au moins en deux parties comporte, après le montage de l'unité de construction, au moins une zone de liaison (9), sur laquelle des parties individuelles (10,11) du goujon sont en prise réciproque selon une liaison par formes complémentaires et selon une liaison de force.

2. Unité de construction pour un véhicule automobile selon la revendication 1, **caractérisée en ce que** le bras de levier (4) est une pédale.

3. Unité de construction pour un véhicule automobile selon l'une des revendications précédentes, **caractérisée en ce que** la liaison entre les parties individuelles (10 et 11) du goujon est une liaison élastique à encliquetage.

4. Unité de construction pour un véhicule automobile selon l'une des revendications précédentes, **caractérisée en ce qu'**une première partie (10) du goujon comporte une extrémité située d'un côté et fendue au moins de façon simple, comportant des parties en forme de crochets (12), des sections (20) de forme rétrécie étant présentes sur le côté de ces parties, tourné vers l'autre partie (11) du goujon.

5. Unité de construction pour un véhicule automobile selon la revendication 4, **caractérisée en ce que** la partie (11) du goujon comporte, du côté de ses extrémités, un contour de préhension, derrière lequel s'engagent les parties en forme de crochets (12) de la première partie (10) du goujon.

6. Unité de construction pour un véhicule automobile selon l'une des revendications précédentes, **caractérisée en ce que** dans les logements (5,6) du bloc de palier (1) sont insérés des éléments de palier (15,16), qui logent le goujon (3) de manière à ce qu'il puisse tourner et glisser.

7. Unité de construction pour un véhicule automobile selon la revendication 6, **caractérisée en ce que** les éléments de palier (15,16) sont des paliers à couches multiples.

8. Unité de construction pour un véhicule automobile selon la revendication 6 ou 7, **caractérisée en ce que** le bras de levier (4) prend appui par des sections en forme de brides (13,14) du côté des éléments de palier (15,16) du bloc de palier (1), vu dans la direction axiale du goujon (3), et comporte, sur son pourtour intérieur, une butée (17), sur laquelle sont appliquées des surfaces de contact associées (18,19) du goujon (3).
